# EUROPEAN PATENT SPECIFICATION

(11) **EP 3 176 034 B1**
(45) Date of publication and mention of the grant of the patent: **01.08.2018**
(21) Application number: 16202087.9
(22) Date of filing: 03.12.2016
(51) Int. Cl.: B60Q 1/068, B60Q 1/076

(54) **ADJUSTABLE LIGHTING DEVICE FOR VEHICLES**
ANPASSBARE BELEUCHTUNGSVORRICHTUNG FÜR FAHRZEUGE
DISPOSITIF D'ÉCLAIRAGE RÉGLABLE POUR VÉHICULES

(30) Priority: 04.12.2015 IT UB20156307
(43) Date of publication of application: 07.06.2017
(73) Proprietor: Automotive Lighting Italia S.p.A., 10078 Venaria Reale (Torino) (IT)
(72) Inventor: BARBERO, Marco, 10078 VENARIA REALE (IT); ZORGNOTTI, Silvano, 10078 VENARIA REALE (IT); CASTELLANA, Pietro, 10078 VENARIA REALE (IT)
(74) Representative: Plebani, Rinaldo

(56) References cited:
- EP-A1- 2 650 172
- GB-A- 2 355 066
- JP-A- H0 867 201
- JP-A- 2008 230 325
- KR-A- 20070 040 038
- US-A1- 2003 169 597

## Description

### Technical field of invention

The present invention relates to an adjustable lighting device for vehicles, typically a front headlamp or headlamp unit, in which adjustment of the tilt angle of the light beam emitted by the headlamp is facilitated in a simple and economical manner.

### Prior art

Vehicle headlamps, whether individual or part of a headlamp unit, are designed to emit a low beam or high beam of light having a desired photometric distribution. To achieve such desired photometric distribution at the correct distance, the tilt angle of the light beam must be adjusted. To such purpose the housing or headlamp body of headlamp units is fitted externally, typically at the back, with a control device that moves, usually via a countershaft fitted with conical sprockets, an adjustment mechanism arranged inside the headlamp body. The control device consists of a rotating element, typically consisting of one of the conical sprockets, carried idle by the headlamp body inside a seat of the headlamp body open towards the outside, generally open upwards; the rotating element is fitted with a socket type gripping cavity suitable to receive a ball head hexagonal male tool, in practice consisting of a stem ending with a ball head on which a hexagonal faceting is made.

The gripping cavity is also spherical with internal hexagonal faceting, so that the tool can be inserted into the cavity of the rotating element of the control device both vertically and in a tilted position of up to 25° from the vertical; by turning the tool, the torque is transmitted via the gripping cavity to the rotating element, activating the control device which, in turn, activates the adjusting device of the tilt angle of the light beam.

Although an initial adjustment is made on the assembly line of the headlamp or headlamp unit, where the rotating element of the control device is easily accessible, a new adjustment needs to be made on the assembly line of the vehicle which the headlamp or headlamp unit is to be mounted on, for example to compensate assembly tolerances. This new adjustment is however difficult and time-consuming to implement and must be done manually, since the control device is at this point in a position that is difficult to access and not visible, inside the engine compartment of the vehicle. The same difficulties are encountered in the case of needing to make a manual adjustment following servicing. JP H0867201A *does not solves these problems.*

### Summary of the invention

The aim of the present invention is to provide an adjustable lighting device for vehicles which overcomes the drawbacks of the prior art, allowing quick, easy and even automatic adjustment of the tilt angle of the light beam of the lighting device fitted on the vehicle.

Consequently, according to the invention an adjustable lighting device for vehicles is provided having the characteristics set forth in the appended claims.

### Brief description of the drawings

Further features and advantages of the present invention will be more apparent from the description below of a non-limiting embodiment made with reference to the appended drawings, wherein:
- Figure 1 shows schematically a perspective, three-quarter view of an adjustable lighting device made according to the invention during an adjustment phase at the bench of such lighting device;
- Figure 2 illustrates schematically a longitudinal cross-section of the lighting device of the invention during the adjustment phase in figure 1, the cross-section being taken along a plane parallel to an optical axis of the lighting device of the invention;
- Figure 3 shows in larger scale a perspective view of a detail of the lighting device according to the invention;
- Figure 4 shows in larger scale a detail of figure 1 during an adjustment phase on the vehicle of the lighting device of the invention; and
- Figure 5 illustrates schematically the same longitudinal cross-section as figure 2 of the lighting device of the invention during the adjustment phase in figure 4.

### Detailed Description

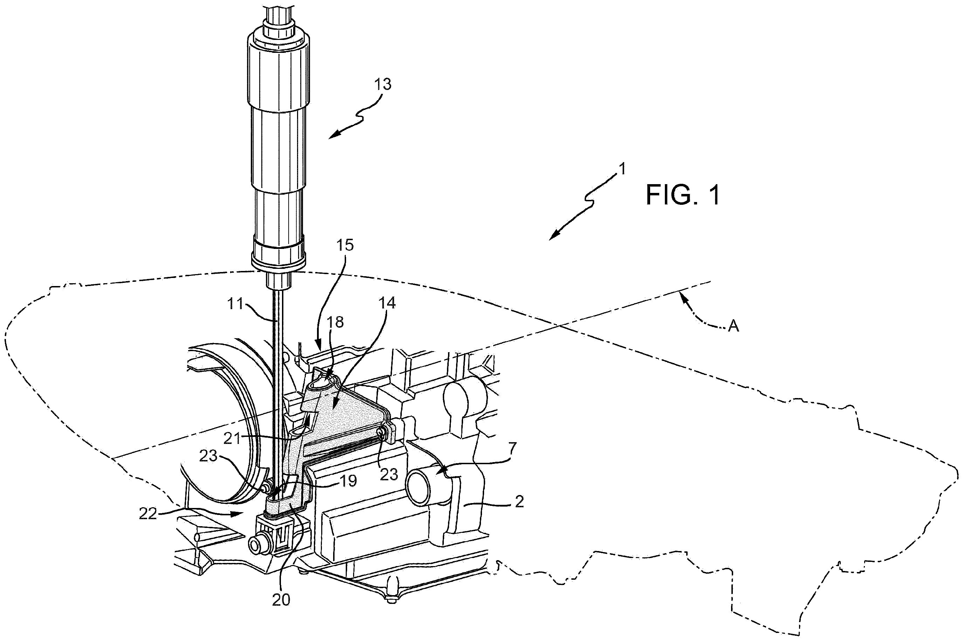

With reference to figures 1 to 5, reference numeral 1 globally denotes a lighting device which, in the non-limiting embodiment shown, consists of a vehicle headlamp group/headlamp.

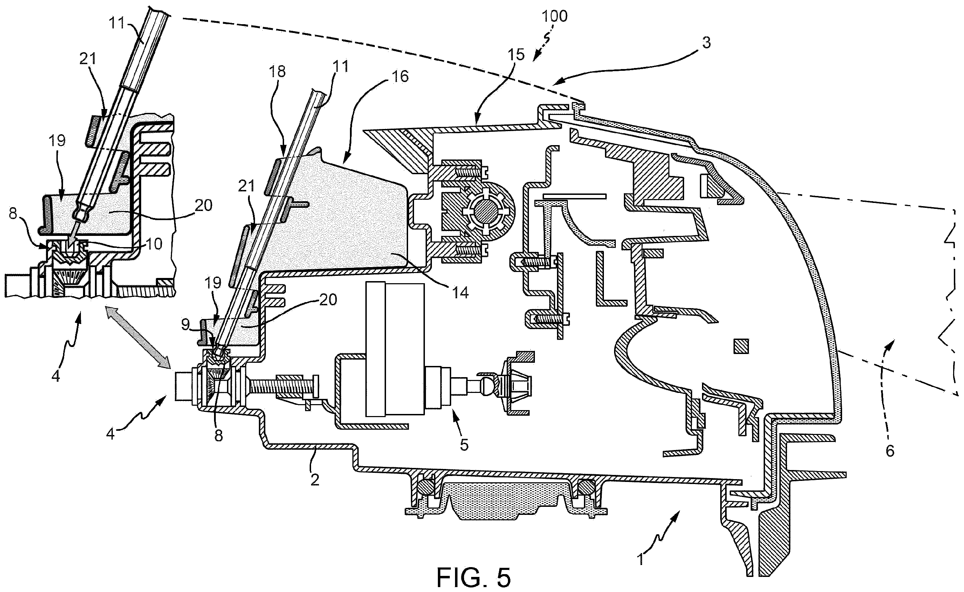

The lighting device 1 comprises a housing or headlamp body 2 designed to be at least partially housed inside an engine compartment 3 (schematically shown in figure 5 by the dotted line) of a vehicle 100 known and therefore not illustrated in detail for the sake of simplicity.

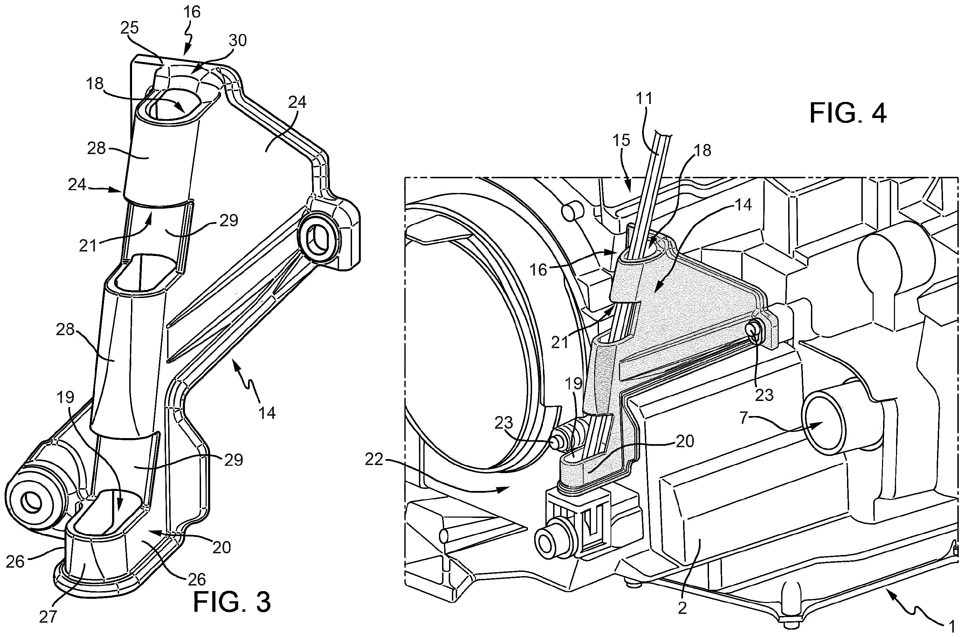

The body or housing 2 of the lighting device 1 is provided externally with at least one control device 4 for an adjusting device 5 (known and therefore not illustrated in detail for the sake of simplicity) of the tilt angle of emission of a light beam 6 (figure 5) of at least one headlight 7 (figures 1 and 4) of the lighting device 1.

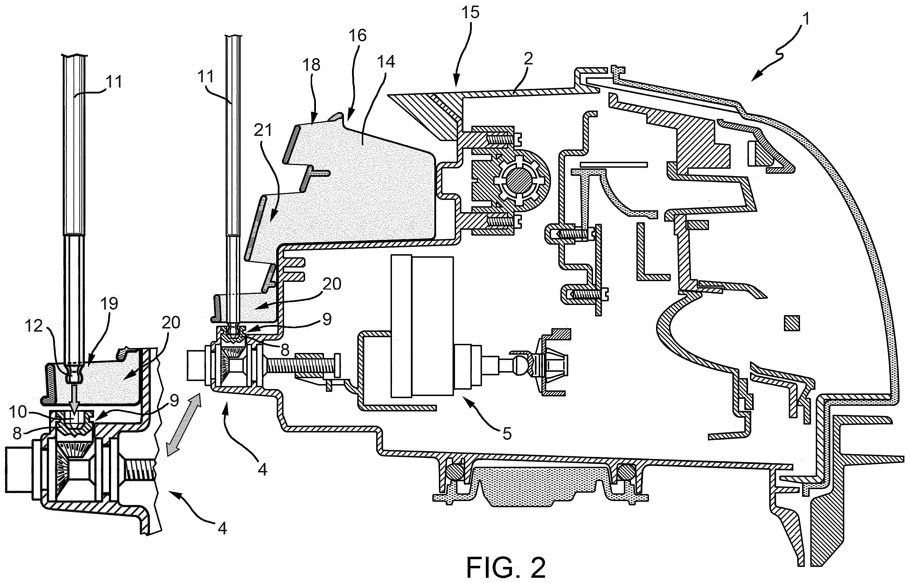

The control device 4 comprises a rotating element 8 (figures 2 and 5) carried idly by the housing or headlamp body 2 inside a seat 9 of the housing or headlamp body 2 accessible from the outside of the housing or headlamp body 2, in particular accessible vertically from above.

The rotating element 8 is provided with a gripping cavity 10 suitable to receive through the seat 9 a ball head hexagonal male tool 11, in itself known, for driving in rotation the rotating element 8.

The tool 11 is shaped as a rod with a prismatic hexagonal shape and is provided with a ball head 12 (figure 2) laterally provided with hexagonal faceting to engage the gripping cavity 10; the tool 11 can be rotated manually by an operator, or be operated automatically by a robot screwdriver 13 or other similar automatic tool. The gripping cavity 10 is also a ball shape and with internal hexagonal faceting matching that of the ball head 12, so that the tool 11 may rotate the rotating element 8 both from a vertical position (figures 1 and 2), and from a position inclined with respect to the vertical (figures 4 and 5) up to about 25°.

According to the invention, the housing or headlamp body 2 is externally provided, by the seat 9 for the rotating element 8, with a guide bracket 14, clearly illustrated in enlarged scale in figure 3. The bracket 14 extends upwards from the seat 9 for the rotating element 8 up to the vicinity of an upper portion 15 of the housing or headlamp body 2, arranged in use, that is, with the lighting device 1 mounted on the vehicle, near the upper edge of the engine compartment 3.

At the upper portion 15, the guide bracket 14 has an upper end 16 provided with a first inlet opening 18 for the male tool 11.

The first inlet opening 18, in use, is therefore arranged in a visible and accessible manner in the engine compartment 3.

The guide bracket 14 has a second inlet opening 19 for the male tool 11 arranged at a base 20 of the guide bracket 14 opposite the upper end 16; the gripping cavity 10 of the rotating element 8 being directly accessible for the male tool 11 through the second inlet opening 19.

The guide bracket 14 delimits further therein a substantially rectilinear guide channel 21 for the male tool 11; the guide channel 21 being arranged laterally to the second inlet opening 19 and extending from the first inlet opening 18 up to the base 20 of the guide bracket 14.

The base 20 is open towards the seat 9 of the rotating element 8 and is arranged facing the rotating element 8.

According to the invention, the guide channel 21 ends in the downwardly open base 20 of the guide bracket 14 and is intersected at least in part by the inlet opening 19 at the base 20 of the guide bracket 14.

This way, according to the main aspect of the invention, the gripping cavity 10 of the rotating element 8 is accessible to the male tool 11 both through the guide channel 21 and through the second inlet opening 19.

Preferably, the guide channel 21 is arranged tilted with respect to the vertical so as to join with the open base 20 of the guide bracket 14 in correspondence with at least part of the inlet opening 19, at a side of said inlet opening 19.

In particular, the guide channel 21 is tilted on the side opposite to a rear portion 22 of the housing or headlamp body 2 (figures 1 and 4) so as to move upwards away from the rear portion 22; the tilt angle of the guide channel 21 is between 1° and 24° and is preferably between 22° and 24°.

Here and hereinafter the expressions "front" and "rear" refer to the direction of an optical axis A of the lighting device 1 (Figure 1).

According to another aspect of the invention, the guide bracket 14, which is generally made by moulding a synthetic plastic material, is coloured in a different colour to that of the housing or headlamp body 2, so as to increase the visibility thereof.

According to a possible embodiment, the guide bracket 14 is obtained integral in one piece with the housing or headlamp body 2 and the seat 9 for the rotating element 8, also made in a moulded synthetic plastic material.

According to the non-limiting embodiment illustrated, instead, the guide bracket 14 is obtained as a separate element from the housing or headlamp body 2 and is fixed integral thereto at the seat 9 for the rotating element 8.

For example, the guide bracket 14 is fixed integral to the housing or headlamp body 2 by means of removable connection means such as screws 23, or snap fitting means.

With particular reference to figure 3, the guide bracket 14 comprises a pair of lateral walls 24 connected to each other transversely by an upper rib 25 and by a frame-shaped base 20 that extends in a cantilever fashion from the lateral walls 24, parallel thereto; the base 20 is provided at the top with the second inlet opening 19, which is slot-shaped and extends for substantially the whole cantilevered length of the base 20; the base 20 is completely open at the bottom being laterally delimited by an extension 26 of the lateral walls and by a free end 27, opposite the lateral walls 24, which transversely connects the lateral walls 24 on the side of their extensions 26.

The guide channel 21 is defined by a pair of U-shaped cross-bars 28 in the direction of cantilevered extension of the base 20 and which project in a cantilevered fashion from the lateral walls 24, parallel thereto; and by a pair of curved winglets 29 extending in a cantilevered fashion between the walls 24, i.e. on the opposite side to the cross-bars 28.

Both the cross-bars 28 and the winglets 29 are made integral in one piece with the side walls 24 and connect them transversely to each other; a first cross-bar 28 is obtained at the upper rib 25 and a second cross-bar is obtained between the first cross-bar 28 and the base 20, so that they are spaced apart from each other and with a concavity thereof facing the lateral walls; the pair of curved winglets 29 have instead their concavity facing the U-shaped cross-bars 28, a first winglet 29 being arranged between the first and the second U-shaped cross-bar 28 and a second winglet 29 being arranged between the second U-shaped cross-bar 28 and the base 20.

This way the channel 21 allows the tool 11 to be guided and supported in all directions and at the same time the bracket 14 is made in a simple way to mould, with reduced consumption of material and without the risk of accumulating humidity in use inside the channel 21.

Lastly, the upper rib 25 is provided on the side opposite to the U-shaped cross-bars 28 with a bevelling 30 to facilitate insertion of the male tool 11 inside the channel 21.

On the basis of the description made, the invention lastly also relates to a vehicle 100 provided with the lighting device 1, wherein the first inlet opening 18 of the guide bracket 14 is arranged in a visible and accessible way in an engine compartment 3 of the vehicle 100 in which the housing or headlamp body 2 is at least partially housed.

As clearly illustrated in figures 2 and 5, thanks to the presence of the bracket 14 it is extremely simple and easy to perform adjustment of the tilt angle of the light beam 6 in all conditions.

When the lighting device is on the production line, thus not mounted on the vehicle (figure 2), the tool 11 can reach the rotating element 8 to control it through the inlet opening 19; in the example illustrated, in this case the tool 11 can be kept vertical.

When, conversely, the lighting device 1 is mounted on the vehicle 100, the seat 9 is arranged deep within the engine compartment 3 and is neither visible nor easily accessible.

In this case, however, thanks to the bracket 14,the rotation of the rotating element 8 can still be performed simply with the tool 11: in fact it is sufficient to align the tool 11 with the channel 21 and insert it in the channel 21 through the inlet opening 18, which is instead still arranged in the engine compartment 3, but at the top of the same, and therefore in a visible and easily accessible position, to be sure to correctly reach the seat 9 and the rotating element 8 even if these are not visible.

Thus, the adjustment on the assembly line of the vehicle 100 of the tilt angle of the light beam 6 can also be performed automatically by the tool or robot 13.

As a result, all the aims of the invention are achieved.

## Claims

1. Adjustable lighting device (1) for vehicles comprising a housing or headlamp body (2) designed to be at least partially housed inside an engine compartment (3) of a vehicle (100) and provided externally with at least one control device (4) for an adjusting device (5) of the tilt angle of emission of a light beam (6) of at least one headlight (7) of the lighting device; the control device comprising a rotating element (8) carried idly by the housing or headlamp body (2) inside a seat (9) of the housing or headlamp body accessible from the outside of the housing or headlamp body; the rotating element (8) being provided with a gripping cavity (10) adapted to receive through the seat a male tool (11) for driving in rotation the rotating element; wherein the housing or headlamp body (2) is provided externally, at the seat (9) for the rotating element, with a guide bracket (14) that extends upwards, from the seat (9) for the rotating element up to the vicinity of an upper portion (15) of the housing or headlamp body, at which the guide bracket (14) has an upper end (16) provided with a first inlet opening (18) for the male tool (11), which first inlet opening (18), in use, is arranged in a visible and accessible way in the engine, when the adjustable lighting device being installed in the vehicle; wherein
the guide bracket (14) delimits therein a substantially rectilinear guide channel (21) for the male tool (11), the guide channel (21) extending from the first inlet opening (18) up to a base (20) of the guide bracket (14), said base being open towards the seat (9) of the rotating element and being arranged facing the rotating element,
**characterised in that**
- the gripping cavity (10) is adapted to receive through the seat the male tool (11) with a hexagonal ball head;
- the guide bracket has a second inlet opening (19) for the male tool arranged at the base (20) of the guide bracket opposite to the upper end of the guide bracket, the gripping cavity (10) of the rotating element being directly accessible for the male tool (11) through the second inlet opening (19);
- the guide channel being arranged laterally to the second inlet opening (19),
- the guide channel (21) terminating in the open base (20) of the guide bracket and being intersected at least partially by the second inlet opening (19) at the base of the guide bracket, the gripping cavity (10) of the rotating element thus being accessible for the male tool (11) both through the guide channel (21) and through the second inlet opening (19).

2. Lighting device according to claim 1, **characterised in that** the guide channel (21) is arranged inclined with respect to the vertical so as to join with the open base (20) of the guide bracket in correspondence with at least part of the second inlet opening (19), at a side thereof.

3. Lighting device according to claim 1 or 2, **characterised in that** the guide bracket (14) is coloured in a different colour to that of the housing or headlamp body (2), so as to increase the visibility of the guide bracket.

4. Lighting device according to one of the preceding claims, **characterised in that** the guide bracket (14) is obtained integral in one piece with the housing or headlamp body (2) and with the seat (9) for the rotating element.

5. Lighting device according to one of claims 1 to 3, **characterised in that** the guide bracket (14) is obtained as a separate element from the housing or headlamp body (2) and is fixed integral thereto at the seat (9) for the rotating element.

6. Lighting device according to claim 5, **characterised in that** the guide bracket (14) is fixed integral to the housing or headlamp body (2) by means of removable connection means such as screws (23), or by snap fitting.

7. Lighting device according to one of the preceding claims, **characterised in that** the guide channel (21) is inclined on the side opposite to a rear portion (22) of the housing or headlamp body so as to move upwards away from said rear portion; the angle of inclination being between 1° and 24°.

8. Lighting device according to one of the preceding claims, **characterised in that** the guide bracket (14) comprises a pair of lateral walls (24) connected to each other transversely by an upper rib (25) and by a frame-shaped base (20) that extends in a cantilever fashion from the lateral walls, parallel thereto; the base (20) is provided at the top with the second inlet opening (19), which is slot-shaped and extends for substantially the whole cantilevered length of the base, and the base is completely open at the bottom being laterally delimited by an extension (26) of the lateral walls and by a free end (27), opposite to the lateral walls, which transversely connects the lateral walls; the guide channel (21) being defined by: a pair of cross-bars (28) U-shaped in the direction of cantilevered extension of the base and which project in a cantilevered fashion from the lateral walls (24), parallel thereto, a first cross-bar obtained at the upper rib (25) and a second cross-bar obtained between the first cross-bar (28) and the base (20), so as the cross-bars are spaced apart from each other and with a concavity thereof facing the lateral walls (24); and by a pair of curved winglets (29) having their concavity facing the U-shaped cross-bars (28), a first winglet (29) being arranged between the first and the second U-shaped cross-bar (28) and a second winglet (29) being arranged between the second U-shaped cross-bar and the base (20).

9. Lighting device according to claim 8, **characterised in that** the upper rib (25) is provided on the side opposite to the U-shaped cross-bars (28) with a bevelling (30) to facilitate insertion of the male tool.

10. Vehicle (100) provided with a lighting device (1) according to one of the preceding claims, wherein the first inlet opening (18) of the guide bracket (14) is arranged in a visible and accessible way in an engine compartment (3) of the vehicle in which the housing or headlamp body (2) is at least partially housed.

## Patentansprüche

1. Anpassbare Beleuchtungsvorrichtung (1) für Fahrzeuge, bestehend aus einem Gehäuse oder Scheinwerferkörper (2), die so konstruiert wurden, dass sie zumindest teilweise in einem Motorraum (3) eines Fahrzeugs (100) untergebracht werden, und mit mindestens einem externen Steuergerät (4) für eine Einstellvorrichtung (5) verbunden sind, mit dem die Neigung der Emission eines Lichtstrahls (6) von mindestens einem Scheinwerfer (7) der Beleuchtungseinrichtung eingestellt werden kann; das Steuergerät besteht aus einem Drehelement (8), frei aufgehängt im Gehäuse oder Scheinwerferkörper (2) in einer Halterung (9) des Gehäuses oder Scheinwerferkörpers, sowie zugänglich von der Außenseite des Gehäuses oder Scheinwerferkörpers; das Drehelement (8) ist mit einer Greifmulde (10) versehen, welche so gestaltet ist, dass durch die Halterung ein Einstellwerkzeug (11) eingeführt werden kann, welches das Drehelement in dessen Drehrichtung drehen kann; wobei am vorhandenen Gehäuse oder Scheinwerferkörper (2) an der Halterung (9) für das Drehelement ein Führungsbügel (14) angebracht ist, der nach oben weisend von der Halterung (9) des Drehelements bis in die Nähe eines oberen Bereichs (15) des Gehäuses oder Scheinwerferkörpers reicht, an dem der Führungsbügel (14) seine Oberseite (16) hat, die mit einer ersten Einlassöffnung (18) für das Einstellwerkzeug (11) versehen ist, und diese erste Einlassöffnung (18) befindet sich für die Verwendung in gut sichtbarer und leicht zugänglicher Weise im Motorraum, wenn die anpassbare Beleuchtungseinrichtung im Fahrzeug eingebaut wird; wobei
der Führungsbügel (14) einen im wesentlichen geradlinigen Führungskanal (21) für das Einstellwerkzeug (11) aufweist, und der Führungskanal (21) von der ersten Einlassöffnung (18) bis zu einem Sockel (20) des Führungsbügels (14) reicht, besagter Sockel ist in Richtung der Halterung (9) des Drehelements offen und so angeordnet, das er dem Drehelement gegenüber liegt; **dadurch gekennzeichnet, dass**
- die Greifmulde (10) so gestaltet ist, dass durch den Sitz das Einstellwerkzeug (11) mit einem Sechskant-Kugelkopf eingeführt werden kann;
- der Führungsbügel (14) eine zweite Einlassöffnung (19) für das Einstellwerkzeug am Sockel (20) des Führungsbügels gegenüber der Oberseite des Führungsbügels aufweist, und die Greifmulde (10) des Drehelements direkt zugänglich für das Einstellwerkzeug (11) durch die zweite Einlassöffnung (19) ist;
- der Führungskanal (21) seitlich zur zweiten Einlassöffnung (19) angeordnet ist,
- der Führungskanal (21) am offenen Sockel (20) des Führungsbügels (14) endet und zumindest teilweise von der zweiten Einlassöffnung (19) am Sockel des Führungsbügels (14) unterbrochen ist. Die Greifmulde (10) des Drehelements ist somit für das Einstellwerkzeug (11) zugänglich, sowohl durch den Führungskanal (21) als auch durch die zweite Einlassöffnung (19).

2. Beleuchtungseinrichtung nach Anspruch 1, **dadurch gekennzeichnet, dass** der Führungskanal (21) vertikal geneigt ist, um einen Anschluss an den offenen Sockel (20) des Führungsbügels (14) an zumindest einem Teil der zweiten Einlassöffnung (19) an dessen Seite zu gestatten.

3. Beleuchtungseinrichtung nach Anspruch 1 oder 2, **dadurch gekennzeichnet, dass** der Führungsbügel (14) mit einer anderen Farbe als das Gehäuse oder der Scheinwerferkörper (2) versehen ist, um so die Sichtbarkeit des Führungsbügels (14) zu verbessern.

4. Beleuchtungseinrichtung nach einem der vorstehenden Ansprüche, **dadurch gekennzeichnet, dass** der Führungsbügel (14) als integriertes Teil des Gehäuses oder Scheinwerferkörpers (2) und der Halterung (9) des Drehelements eingebaut ist.

5. Beleuchtungseinrichtung nach einem der Ansprüche 1 bis 3, **dadurch gekennzeichnet, dass** der Führungsbügel (14) als ein vom Gehäuse oder Scheinwerferkörper (2) separates Teil gestaltet ist und somit fest an der Halterung (9) des Drehelements eingebaut wird.

6. Beleuchtungseinrichtung gemäß Anspruch 5, **dadurch gekennzeichnet, dass** der Führungsbügel (14) am Gehäuse oder Scheinwerferkörper (2) befestigt wird und die Befestigung durch abnehmbare Verschlüsse wie Schrauben (23) oder Klemmen erfolgt.

7. Beleuchtungseinrichtung nach einem der vorstehenden Ansprüche, **dadurch gekennzeichnet, dass** der Führungskanal (21) zur gegenüberliegenden Seite eines rückwärtigen Teilstücks (22) des Gehäuses oder Scheinwerferkörpers geneigt ist, und sich somit nach oben und von besagtem rückwärtigen Teilstück weg bewegt ; der Neigungswinkel liegt zwischen 1° und 24°.

8. Beleuchtungseinrichtung nach einem der vorstehenden Ansprüche, **dadurch gekennzeichnet, dass** der Führungsbügel (14) ein Paar Seitenwände (24) beinhaltet, die miteinander quer durch eine obere Strebe (25) verbunden sind, sowie einem rahmenförmigen Sockel (20), der auskragend mit den Seitenwänden und parallel zu diesen aufgehängt ist; der Sockel (20) ist an der Oberseite mit der zweiten Einlassöffnung (19) versehen, welche schlitzförmig ist und sich im Wesentlichen über die gesamte freitragende Länge des Sockels erstreckt, und der Sockel ist nach unten vollständig offen und wird seitlich begrenzt durch eine Verlängerung (26) der Seitenwände und durch ein freies Ende (27), gegenüber der Seitenwände, welches die Seitenwände quer verbindet; der Führungskanal (21) weist Folgendes auf: ein Paar Querstreben (28), u-förmig und sich in Richtung der auskragenden Verlängerung des Sockels erstreckend und freitragend hereinragt von den Seitenwänden (24), parallel dazu eine erste Querstrebe, an der oberen Strebe (25) und eine zweite Querstrebe zwischen der ersten Querstrebe (28) und dem Sockel (20), wodurch die Querstreben voneinander abstehen und in Bezug auf die Seitenwände (24) gewölbt sind; sowie durch ein Paar von gekrümmten Seitenflügeln (29) mit ihrer Wölbung den u-förmigen Querstreben (28) gegenüber liegend, ein erster Seitenflügel (29), angeordnet zwischen der ersten und dem zweiten u-förmigen Querstrebe (28) und ein zweiter Seitenflügel (29), angeordnet zwischen der zweiten u-förmigen Querstrebe und dem Sockel (20) .

9. Beleuchtungseinrichtung gemäß Anspruch 8, **dadurch gekennzeichnet, dass** die obere Strebe (25) sich auf der gegenüberliegenden Seite der u-förmigen Querstreben (28) befindet und eine abgeschrägte Kante (30) aufweist, um das Einführen des Einstellwerkzeugs zu erleichtern.

10. Fahrzeug (100) mit einer Beleuchtungseinrichtung (1) nach einem der vorstehenden Ansprüche, **dadurch gekennzeichnet, dass** die erste Einlassöffnung (18) des Führungsbügels (14) auf eine sichtbare und zugängliche Art und Weise in einem Motorraum (3) des Fahrzeugs angebracht ist, in dem das Gehäuse oder der Scheinwerferkörper (2) zumindest teilweise untergebracht werden.

## Revendications

1. Dispositif d'éclairage réglable (1) pour des véhicules comprenant un boîtier ou un corps de projecteur (2) conçu pour être au moins partiellement logé dans un compartiment de moteur (3) d'un véhicule (100) et doté en externe d'au moins un dispositif de commande (4) pour un dispositif d'ajustement (5) de l'angle d'inclinaison d'émission d'un faisceau de lumière (6) d'au moins un phare (7) du dispositif d'éclairage ; le dispositif de commande comprenant un élément rotatif (8) porté sans intervenir par le boîtier ou corps de projecteur (2) dans un siège (9) du boîtier ou corps de projecteur accessible de l'extérieur du boîtier ou corps de projecteur ; l'élément rotatif (8) étant doté d'une cavité de préhension (10) adaptée pour recevoir au travers du siège un outil mâle (11) servant à entraîner en rotation l'élément rotatif ; dans lequel
le boîtier ou corps de projecteur (2) est prévu en externe, sur le siège (9) pour l'élément rotatif, avec un support de guidage (14) qui s'étend vers le haut, depuis le siège (9) pour l'élément rotatif jusqu'à proximité d'une portion supérieure (15) du boîtier ou corps de projecteur, sur lequel le support de guidage (14) présente une extrémité supérieure (16) dotée d'une première ouverture d'entrée (18) pour l'outil mâle (11), laquelle première ouverture d'entrée (18), en utilisation, est agencée de manière visible et accessible dans le moteur, lorsque le dispositif d'éclairage réglable est installé dans le véhicule ; dans lequel le support de guidage (14) délimite dans celui-ci un canal de guidage sensiblement rectiligne (21) pour l'outil mâle (11), le canal de guidage (21) s'étendant depuis la première ouverture d'entrée (18) jusqu'à une base (20) du support de guidage (14), ladite base étant ouverte vers le siège (9) de l'élément rotatif et étant agencée faisant face à l'élément rotatif,
**caractérisé en ce que**
- la cavité de préhension (10) est adaptée pour recevoir au travers du siège l'outil mâle (11) avec une tête hexagonale ;
- le support de guidage présente une seconde ouverture d'entrée (19) pour l'outil mâle agencée sur la base (20) du support de guidage à l'opposé de l'extrémité supérieure du support de guidage, la cavité de préhension (10) de l'élément rotatif étant directement accessible pour l'outil mâle (11) au travers de la seconde ouverture d'entrée (19) ;
- le canal de guidage étant agencé latéralement sur la seconde ouverture d'entrée (19),
- le canal de guidage (21) se terminant dans la base ouverte (20) du support de guidage et étant traversé au moins partiellement par la seconde ouverture d'entrée (19) sur la base du support de guidage, la cavité de préhension (10) de l'élément rotatif étant ainsi accessible pour l'outil mâle (11) à la fois au travers du canal de guidage (21) et au travers de la seconde ouverture d'entrée (19).

2. Dispositif d'éclairage selon la revendication 1, **caractérisé en ce que** le canal de guidage (21) est agencé incliné par rapport à la verticale de sorte à joindre la base ouverte (20) du support de guidage en correspondance d'au moins une partie de la seconde ouverture d'entrée (19), sur un côté de celui-ci.

3. Dispositif d'éclairage selon la revendication 1 ou 2, **caractérisé en ce que** le support de guidage (14) est coloré dans une couleur différente de celle du boîtier ou corps de projecteur (2) de sorte à augmenter la visibilité du support de guidage.

4. Dispositif d'éclairage selon l'une des revendications précédentes, **caractérisé en ce que** le support de guidage (14) est obtenu d'un seul tenant en une pièce avec le boîtier ou corps de projecteur (2) et avec le siège (9) pour l'élément rotatif.

5. Dispositif d'éclairage selon l'une des revendications 1 à 3, **caractérisé en ce que** le support de guidage (14) est obtenu en tant qu'élément séparé du boîtier ou corps de projecteur (2) et est fixé d'un seul tenant avec celui-ci sur le siège (9) pour l'élément rotatif.

6. Dispositif d'éclairage selon la revendication 5, **caractérisé en ce que** le support de guidage (14) est fixé d'un seul tenant sur le boîtier ou corps de projecteur (2) à l'aide de moyens de connexion amovibles tels que des vis (23), ou par encliquetage.

7. Dispositif d'éclairage selon l'une des revendications précédentes, **caractérisé en ce que** le canal de guidage (21) est incliné sur le côté opposé à une portion arrière (22) du boîtier ou corps de projecteur de sorte à se déplacer vers le haut loin de ladite portion arrière ; l'angle d'inclinaison étant entre 1° et 24°.

8. Dispositif d'éclairage selon l'une des revendications précédentes, **caractérisé en ce que** le support de guidage (14) comprend une paire de parois latérales (24) raccordées l'une à l'autre transversalement par une nervure supérieure (25) et par une base en forme de cadre (20) qui s'étend en porte-à-faux depuis les parois latérales, parallèlement à celles-ci ; la base (20) est dotée sur le dessus de la seconde ouverture d'entrée (19), qui est en forme de fente et s'étend pour sensiblement la longueur en porte-à-faux entière de la base, et la base est complètement ouverte sur le fond qui est latéralement délimité par une extension (26) des parois latérales et par une extrémité libre (27), opposée aux parois latérales, qui connecte transversalement les parois latérales ; le canal de guidage (21) étant défini par : une paire de barres transversales (28) en forme de U dans la direction de l'extension en porte-à-faux de la base et qui font saillie en porte-à-faux des parois latérales (24), parallèlement à celles-ci, une première barre transversale obtenue sur la nervure supérieure (25) et une seconde barre transversale obtenue entre la première barre transversale (28) et la base (20) de sorte que les barres transversales soient espacées les unes des autres et avec une concavité de celles-ci faisant face aux parois latérales (24) ; et par une paire d'ailettes courbées (29) présentant leur concavité faisant face aux barres transversales en forme de U (28), une première ailette (29) étant agencée entre la première et la seconde barre transversale en forme de U (28) et une seconde ailette (29) étant agencée entre la seconde barre transversale en forme de U et la base (20).

9. Dispositif d'éclairage selon la revendication 8, **caractérisé en ce que** la nervure supérieure (25) est prévue sur le côté opposé aux barres transversales en U (28) avec un biseautage (30) pour faciliter l'insertion de l'outil mâle.

10. Véhicule (100) doté d'un dispositif d'éclairage (1) selon l'une des revendications précédentes, dans lequel la première ouverture d'entrée (18) du support de guidage (14) est agencée de manière visible et accessible dans un compartiment de moteur (3) du véhicule dans lequel le boîtier ou corps de projecteur (2) est au moins partiellement logé.
